(19) Europäisches Patentamt
European Patent Office
Office européen des brevets

(11) Publication number: 0 059 415 B1

(12) EUROPEAN PATENT SPECIFICATION

(45) Date of publication of patent specification: 18.12.85

(51) Int. Cl.⁴: H 04 L 27/22

(21) Application number: 82101361.2

(22) Date of filing: 23.02.82

# (54) System for demodulation of phase-shift keying signals.

(30) Priority: 24.02.81 JP 25709/81
24.02.81 JP 25710/81

(43) Date of publication of application:
08.09.82 Bulletin 82/36

(45) Publication of the grant of the patent:
18.12.85 Bulletin 85/51

(84) Designated Contracting States:
DE FR IT

(56) References cited:
DE-A-2 216 259
DE-A-2 646 255
DE-B-2 712 381
US-A-3 766 480
US-A-3 919 653

(73) Proprietor: NEC CORPORATION
33-1, Shiba 5-chome, Minato-ku
Tokyo 108 (JP)

(72) Inventor: Atobe, Masaaki
c/o Nippon Electric Co., Ltd. 33-1, Shiba
Gochome
Minoata-ku Tokyo (JP)
Inventor: Tagashira, Yoshimi
c/o Nippon Electric Co. Ltd. 33-1, Shiba
Gochome
Minota-ku Tokyo (JP)

(74) Representative: Kehl, Günther, Dipl.-Phys. et al
Patentanwälte GEYER, HAGEMANN & KEHL
Ismaninger Strasse 108 Postfach 86 03 29
D-8000 München 86 (DE)

EP 0 059 415 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a system for demodulation of phase shift keying signals comprising means receiving the phase shift keying signal for regenerating a carrier wave therefrom, a bandpass filter, demodulator means for demodulating the phase shift in response to the generated carrier wave to thereby produce a demodulated signal having two orthogonal components, a control circuit for detecting phase variations in the regenerated carrier wave from the demodulated signal and phase control means responsive to the output of the control circuit to control the phase of the carrier wave passing through the bandpass filter.

A system of this kind is known from DE—A—2 216 259. In this known system for the extraction of the reference carrier wave from the PSK-signal, the PSK-signal is converted into a continuous signal by use of the frequency multiplier having a miltiplication factor 4, a bandpass filter and a corresponding frequency divider thereby eliminating modulated components and further phase jitters. This system is deficient in that it is vulnerable to changes in the input frequency. Since the bandpass filter has its central frequency fixed, a possible change in the input frequency will cause a phase modulation in the regenerated carrier wave, with the result that the demodulated output of the PSK-signal is attenuated.

Further US—A—3 766 480 discloses a device for recovering a frequency showing phase jitter. In the known device frequency shift and phase jitter impressed on PSK-modulated signal spectra during long distance transmission is eliminated at the receiver where the data spectra exclusive of the harmonically related pilot frequency is time and phase delayed by a discrete amount in a data recovery path. At the same time, a demodulation frequency is extracted from the signal spectrum in a carrier recovery path, the demodulation frequency being the sum of the pilot frequencies. Relatedly, the demodulation frequency is time and phase delayed in the carrier recovery path by an amount equal to that of the data path. Demodulation of the data spectra thus subtractively eliminates the frequency shift and jitter components.

This known device needs a pilot frequency to be transmitted through the transmission channel which pilot frequency lies outside the data frequency band. This pilot frequency further burdens the transmission channel.

It is an object of the invention to provide a simplified PSK-signal demodulation circuit, which suffers little from jitters of the reference carrier wave and assures stable communication despite variations in the input frequency.

In order to achieve this object, the solution according to the invention provides that the control circuit contains an adder, a subtractor and a first multiplier each having two inputs to which the orthogonal components are connected the outputs of the adder and the subtractor are connected to a second multiplier, the output of the second multiplier and the output of the first multiplier are connected to a third multiplier the output of which is representive for the output of the control circuit.

Brief description of the drawings

Fig. 1 is a block diagram illustrating the essential part of a first embodiment of this invention.

Fig. 2 is a block diagram of a control circuit in Fig. 1.

Fig. 3 is a diagram showing waveforms of 4-phase modulation.

Fig. 4 is a block diagram illustrating the essential part of a second embodiment of this invention.

Fig. 5 is a block diagram illustrating the essential part of a third embodiment of the present invention.

Fig. 6 is a block diagram illustrating the essential part of a fourth embodiment of the present invention.

Fig. 7 is a block diagram illustrating the essential part of a fifth embodiment of the present invention.

Fig. 8 is a block diagram illustrating the essential part of a sixth embodiment of the present invention.

In the Figures, like reference numerals represent like components.

Description of preferred embodiments

Now, embodiments of the present invention will be described below with reference to the accompanying drawings. Fig. 1 is a block diagram illustrating the essential part of a first embodiment of the invention. To an input terminal 1 for PSK signals are connected a PSK signal demodulator 2 and a remodulator 3. To the remodulator 3 is connected a delay line or circuit 5 having a delay time $\tau_1$. To this delay circuit 5 is connected a tunable bandpass filter 6a comprised of, for example, a varactor diode. In this arrangement, the delay circuit 5 is not formed by insertion of any specific delay circuit but is representative of an accumulation of delay times over an amplifier, a limiter circuit, and the tunable bandpass filter 6a and/or accruing from other causes.

From the tunable bandpass filter 6a, the carrier wave input signal for demodulation is led to an input terminal 7 of the PSK signal demodulator 2. To a control circuit 8 which characterizes the present invention, a horizontal component $e_1$ and a vertical component $e_2$, i.e., the orthogonal components into which the demodulation output of the PSK signal demodulator 2 has been divided, are led. A control signal $e_c$ of the control circuit 8 is led to the tunable bandpass filter 6a. In Fig. 1, 9 and 21 denote output terminals for demodulated signals. The orthogonal components $e_1$ and $e_2$ are also fed to the remodulator 3 via waveform shapers 30 and 31 to drive the remodulator 3.

Now, the operation of the demodulation circuit constructed as described above will be described.

The signal obtained from the remodulation of the PSK input signal in the remodulator 3 is passed through the tunable bandpass filter 6a to produce a carrier wave necessary for demodulation in the same way as with the conventional system. In this case, the output of the control circuit 8 causes the central frequency of the tunable bandpass filter 6a to follow the variations in the frequency on the transmitter side.

Let $\omega_0$ stand for an angular frequency of carrier wave of the input signal and $\Delta\omega$ for its variation, then the phase at the terminal 7 will be expressed as follows:

$$\theta+\Delta\theta=(\omega_0+\Delta\omega)\tau_1,\ \theta=\omega_0\tau_1 \qquad (1)$$

Since $\omega_0$ is a fixed freqeuncy, the phase of the regenerated carrier wave can be adjusted to a desired level by finely adjusting the delay time $\tau_1$ of $\theta$ (normally, a variable phase shifter is incorporated for this adjustment in the circuit). The varying phase component attributable to $\Delta\theta$, namely,

$$\Delta\theta=\Delta\omega\tau_1$$

represents a phase error which leads to degradation of the demodulation characteristics. Therefore, the phase component is desired to be reduced to 0. For this purpose, the present invention detects this phase component $\Delta\theta$ with the control circuit 8, generates a control signal proportional to $\Delta\theta$, reverses the polarity of the control signal, feeds the resultant control signal to the tunable bandpass filter 6a, and controls the central frequency of the filter 6a so that the central frequency will follow the variations in the frequency on the transmitter side. The fact that as the control signal proportional to $\Delta\theta$ is amplified, so the $\Delta\theta$ is compressed and the fact that a low-pass filter is required to be incorporated in the feedback circuit are similar to those which are involved in the ordinary configuration of any phase locked loop.

These facts will be described more fully below.

Fig. 2 is a block diagram illustrating an example of the control circuit 8 in detail. This example uses a 4-phase PSK signal. The configuration of Fig. 2 generally has a PSK signal demodulator 2 and a control circuit 8.

To the input terminal for the PSK signal are connected mixers 10 and 11. To the other input terminal of the mixer 10, the output of a $\pi/2$ phase shifter 12 is fed. To the other input terminal of the mixer 11, the output of the tunable bandpass filter 6a is fed via the terminal 7. The outputs from the mixers 10 and 11 are fed respectively to an adder 13 and a subtractor 14. Further, the outputs from the mixers 10 and 11 are led to a multiplier 15. The outputs from the adder 13 and subtractor 14 are led to a multiplier 16. The outputs from the multipliers 15 and 16 are led to a multiplier 17. The output from this multiplier 17 is led to an inverted amplifier 18 having a gain $-K$. The output from the inverted amplifier 18 is led to a low-pass filter 19. The resultant output serves as the control signal $e_c$ for the tunable bandpass filter 6a illustrated in Fig. 1 or a voltage-controlled oscillator to be described later.

Fig. 3 represents a diagram showing 4-phase modulated waveforms. When the baseband processing is effected on the receiver side, one of the four phases indicated by the broken line is locked and the phase is drawn at the point at which the curves of solid line rising upwardly to the right intersect the zero level. The phase drawing is effected in the ranges, respectively indicated by A, B, C and D.

In the configuration described above, the PSK signal is fed from the input terminal 1 to the PSK signal demodulator 2. By the mixers 10 and 11, the signal is divided into orthogonal components, i.e., a horizontal component $e_1$ and a vertical component $e_2$ expressed as below:

$$e_1=\sin(\Delta\theta+a_i\frac{\pi}{4})$$

$$e_2=\cos(\Delta\theta+a_i\frac{\pi}{4})$$

where $\Delta\theta$ denotes the phase error of the carrier wave and $a_1$ denotes the modulated phase sign which freely assumes a value of $\pm1$ or $\pm3$.

The orthogonal components $e_1$ and $e_2$ are added to each other in the adder 13 and subtracted from each other in the subtractor 14. Subsequently, they are multiplied by each other in the multiplier 16. From the multiplier 16, therefore, the following output is obtained.

$$A=(e_1+e_2)\times(e_1-e_2)$$

From the multiplier 15, the following product is obtained as an output.

$$B=e_1\times e_2.$$

These outputs, A and B, are multiplied by each other in the multiplier 17. The output from this multiplier 17 is as shown below.

$$C=A\times B$$

$$=(\sin 2\Delta\theta \sin a_i\frac{\pi}{2})$$

$$\times\tfrac{1}{2}\{\sin(2\Delta\theta+a_i\frac{\pi}{2})\}$$

Since $a_i=\pm1$ or $\pm3$, the following expression is obtained.

$$C=\tfrac{1}{2}\sin 2\Delta\theta\times\cos 2\Delta\theta$$
$$\doteqdot\tfrac{1}{4}\sin 4\Delta\theta$$

The control signal $e_c$, therefore, is expressed as

$$e_c = -K \times 1/4 \sin 4\Delta\theta.$$

Since the value of $\Delta\theta$ is extremely small, the following expression is derived.

$$e_c = -K \times \tfrac{1}{4} \sin 4\Delta\theta$$
$$= -K\Delta\theta.$$

Thus, the control signal $e_c$ becomes a signal which has a polarity opposite to the polarity of the phase error and a magnitude proportional to that of the phase error. Controlled by this control signal $e_c$ is the central frequency of the tunable bandpass filter 6a illustrated in Fig. 1 or the frequency of a voltage-controlled oscillator to be described later, so that the central frequency of the tunable bandpass filter 6a is made to follow the variations in the frequency on the transmitter side.

This example has been described in terms of the 4-phase PSK signal. In case where the received signal is a multi-value modulated signal (such as, for example, 16 AM and 8 PSK), the extraction of the phase error signal can be effected by converting the demodulated signal into horizontal and vertical components equivalent to those of the 4 PSK signal. This rule similarly applies to the system using 2 PSK signal.

Fig. 4 is a block diagram illustrating the essential part of a second embodiment of this invention. Compared with the previous embodiment, the second embodiment is characterized by additionally comprising a variable phase shifter 20 comprised of, for example, a varactor diode, whereby the control signals $e_c$ from the control circuit 8 is applied to the shifter 20. A possible variation in the frequency of the input carrier wave will cause a deviation of phase in the regenerated carrier wave which has passed through a bandpass filter 6b (not tunable). This phase deviation is compensated for by causing the control signal $e_c$ from the control circuit 8 to control the variable phase shifter 20.

Fig. 5 is a block diagram illustrating the essential part of a third embodiment of this invention. As compared with the first embodiment, the third embodiment is characterized by effecting the elimination of modulated component by use of a frequency multiplier. In Fig. 5, 22 denotes an N-frequency multiplier and 23 a 1/N-frequency divider.

To be specific, the N-frequency multiplier 22 serves to eliminate phase modulated components and the 1/N-frequency divider serves to restore, through multiplication by 1/N, the frequency of the regenerated carrier wave which has passed through the tunable bandpass filter 6a for elimination of phase jitters and amplitude jitters into the frequency of the input signal carrier wave.

Fig. 6 is a block diagram illustrating the essential part of a fourth embodiment of this invention. This embodiment similarly effects the elimination of modulated components by means of a multiplier. It represents the use of the frequency multiplier in the configuration of the second embodiment.

In Fig. 6, 22 denotes an N-frequency multiplier and 23 a 1/N-frequency divider.

To be specific, the N-frequency multiplier 22 serves to eliminate phase modulated components and the 1/N-frequency divider 23 serves to restore, through multiplication by 1/N, the frequency of the regenerated carrier wave which has passed through the bandpass filter 6b for elimination of phase jitters and amplitude jitters into the frequency of the input signal carrier wave.

Fig. 7 shows, in block form, a fifth embodiment of this invention. In this embodiment, a control signal $e_c$ of the control circuit 8 is fed to a voltage-controlled oscillator 24. The outputs of the voltage-controlled oscillator 24 are fed to frequency converters 25 and 26 as their local oscillation frequencies. The local oscillation frequencies applied from the voltage-controlled oscillator 24 to the frequency converters 25 and 26 are varied synchronously. In operation, the signal obtained from the remodulation of the PSK input signal in the remodulator 3 is passed through the bandpass filter 6b of a fixed frequency to produce a carrier wave for demodulation. In this process, the control circuit 8 detects a phase variation of the regenerated carrier wave from the modulated signal and applies the control signal $e_c$ corresponding to the phase variation to the voltage-controlled oscillator 24. In response thereto, the voltage-controlled oscillator 24 simultaneously changes the local oscillation frequencies to be applied to the frequency converters 25 and 26. As a result, the frequency of the carrier wave being passed through the bandpass filter 6b is constantly made fixed, thereby preventing the phase deviation of the reference carrier wave for regeneration. In this embodiment, the control signal $e_c$ generated from the control circuit 8 which is proportional to the phase variation is inverted in polarity and applied to the voltage-controlled oscillator 24 so that the frequencies of the frequency converters 25 and 26 are made to follow the variations in the frequency on the transmitter side.

Fig. 8 is a block diagram illustrating the essential part of a sixth embodiment of the present invention. This embodiment effects the elimination of modulated components by use of an N-frequency multiplier. In Fig. 8, 22 denotes an N-frequency multiplier and 23 a 1/N-frequency divider. To be more specific, the phase modulated components are eliminated by the N-frequency multiplier 23 and the phase jitters and the oscillation jitters are eliminated by passage through the bandpass filter 6b. The frequency of regenerated carrier wave is recovered to the frequency of the input signal carrier wave by multiplying the regenerated carrier wave frequency by 1/N in the 1/N-frequency divider 23.

As described above, the present invention assures the detection of variations in the carrier wave phase by use of the output of demodulated carrier wave and controls the central frequency of the tunable bandpass filter on the basis of the detected variation so that the central frequency will follow the variation of the frequency on the transmitter side, or converts the frequency of the bandpass filter output so that the frequency of the regenerated carrier wave will follow the variation of the frequency on the transmitter side.

The system of the present invention, therefore, permits stable communication to be continued despite variations in the input frequency. Moreover, it can be used with the conventional system without requiring any modification thereto. Consequently, the relatively simple construction and the ample freedom from jitters of the reference carrier waves which constitute the merits for the carrier wave regeneration circuit incorporating a remodulator or an N-frequency multiplier (in the case of N-phase modulated signals) and a bandpass filter are retained intact by the system of this invention.

**Claims**

1. A system for demodulation of phase shift keying signals comprising:

a) means (3; 22) receiving the phase shift keying signal for regenerating a carrier wave therefrom

b) a bandpass filter (6a; 6b)

c) demodulator means (2) for demodulating the phase shift in response to the regenerated carrier wave to thereby produce a demodulated signal having two orthogonal components ($e_1$, $e_2$),

d) a control circuit (8) for detecting phase variations in the regenerated carrier wave from the demodulated signal ($e_1$, $e_2$); and

e) phase control means (6a; 20; 24, 25, 26) responsive to the output ($e_c$) of the control circuit (8) to control the phase of the carrier wave passing through the bandpass filter,

characterized in that the control circuit (8) contains an adder (13) a subtractor (14) and a first multiplier (15) each having two inputs to which the orthogonal components ($e_1$, $e_2$) are connected, the outputs of the adder (13) and the subtractor (14) are connected to a second multiplier (16), the output of the second multiplier (16) and the output of the first multiplier (15) are connected to a third multiplier (17) the output of which is representative for the output ($e_c$) of the control circuit.

2. A demodulation system according to claim 1, characterized in that the means receiving the phase shift keying signal for generating a carrier wave therefrom consists of a remodulator (3) and that the input of the bandpass filter (6a; 6b) is connected to the output of the remodulator (3).

3. A demodulation system according to claim 2, characterized in that the remodulator (3) is also connected to the output of the demodulator means (2).

**Patentansprüche**

1. System zur Demodulation von PSK-Signalen (Phasenumtastsignalen) mit

a) Mitteln (3; 22) die das PSK-Signal zur Regenerierung einer Trägerwelle aufnehmen,

b) einem Bandpassfilter (6a; 6b),

c) Demodulationsmitteln (2) zum Demodulieren der Phasenverschiebung im Ansprechen auf die regenerierte Trägerwelle, um dabei ein demoduliertes Signal mit zwei orthogonalen Komponenten ($e_1$, $e_2$) zu erzeugen,

d) eine Steuerschaltung (8) zum Nachweis von Phasenänderungen in der regenerierten Trägerwelle aus dem demodulierten Signal ($e_1$, $e_2$) und

e) Phasenregelmittel (6a; 20; 24, 25, 26), die auf das Ausgangssignal ($e_c$) der Steuerschaltung (8) ansprechen, um die Phase der durch das Bandpassfilter hindurchtretenden Welle zu regeln,

dadurch gekennzeichnet, daß die Steuerschaltung (8) einen Addierer (13), einen Subtrahierer (14) un einen ersten Multiplizierer (15) aufweist, die jeweils zwei Eingänge aufweisen, denen die orthogonalen Komponenten ($e_1$, $e_2$) zugeführt werden, daß die Ausgänge des Addierers (13) und des Subtrahierers (14) mit einem zweiten Multiplizierer (16) verbunden sind, und daß der Ausgang des zweiten Multiplizierers (16) und der Ausgang des ersten Multiplizierers (15) mit einem dritten Multiplizierer (17) verbunden sind, dessen Ausgangssignal ($e_c$) repräsentativ für das Ausgangssignal der Steuerschaltung ist.

2. Demodulationssystem nach Anspruch 1, dadurch gekennzeichnet, daß die Mittel, die das PSK-Signal aufnehmen, um daraus eine Trägerwelle zu erzeugen, aus einem Remodulator (3) bestehen, und daß der Eingang des Bandpassfilters (6a; 6b) mit dem Ausgang des Remodulators (3) verbunden ist.

3. Demodulationssystem nach Anspruch 2, dadurch gekennzeichnet, daß der Remodulator auch an den Ausgang der Demodulationsmittel angeschlossen ist.

**Revendications**

1. Système de démodulation de signaux de manipulation de déphasage comprenant:

a) un moyen (3; 22) recevant le signal de manipulation de dépasage pour reproduire une onde porteuse à partir de lui,

b) un filtre passe-bande (6a; 6b),

c) un moyen de démodulateur (2) pour démoduler le déphasage en réponse à l'onde porteuse reproduite afin de donner un signal démodulé atant deux composantes orthogonales ($e_1$, $e_2$),

d) un circuit de commande (8) pour détecter des variations de phase dans l'onde porteuse reproduite à partir du signal démodulé ($e_1$, $e_2$), et

e) un moyen de commande de phase (6a; 20; 24; 25; 26) répondant à la sortie ($e_c$) du circuit de commande (8) pour commander la phase de l'onde porteuse traversant le filtre passe-bande,

caractérisé en ce que le circuit de commande (8) contient un additionneur (13), un soustracteur (14) et un premier multiplicateur (15) ayant chacun deux entrées auxquelles les composantes orthogonales ($e_1$, $e_2$) sont connectées, les sorties de l'additionneur (13) et du soustracteur (14) sont reliées à un second multiplicateur (16), la sortie du second multiplicateur (16) et la sortie du premier multiplicateur (15) sont reliées à un troisième multiplicateur (17) dont la sortie est représentative de la sortie ($e_c$) du circuit de commande.

2. Système de démodulation selon la revendication 1, caractérisé en ce que le moyen recevant le signal de manipulation de déphasage pour produire une onde porteuse à partir de celui-ci comprend un remodulateur (3), et en ce que l'entrée du filtre passe-bande (6a; 6b) est reliée à la sortie du remodulateur (3).

3. Système de démodulation selon la revendication 2, car en ce que le remodulateur (3) est également relié à la sortie du moyen de démodulateur (2).

FIG.1

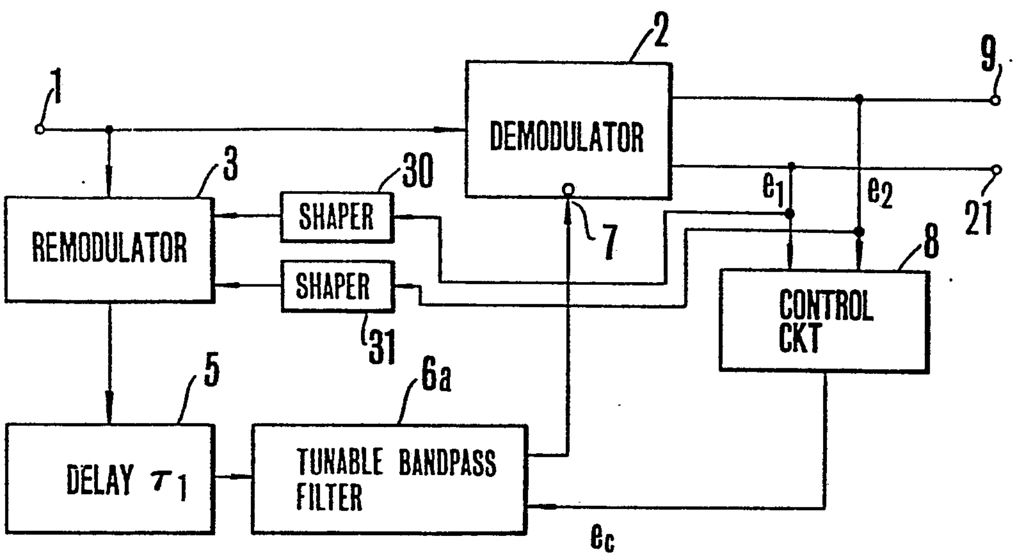
1
2
DEMODULATOR
9
3
REMODULATOR
30
SHAPER
SHAPER
31
7
$e_1$
$e_2$
21
8
CONTROL CKT
5
DELAY $\tau_1$
6a
TUNABLE BANDPASS FILTER
$e_c$

FIG.2

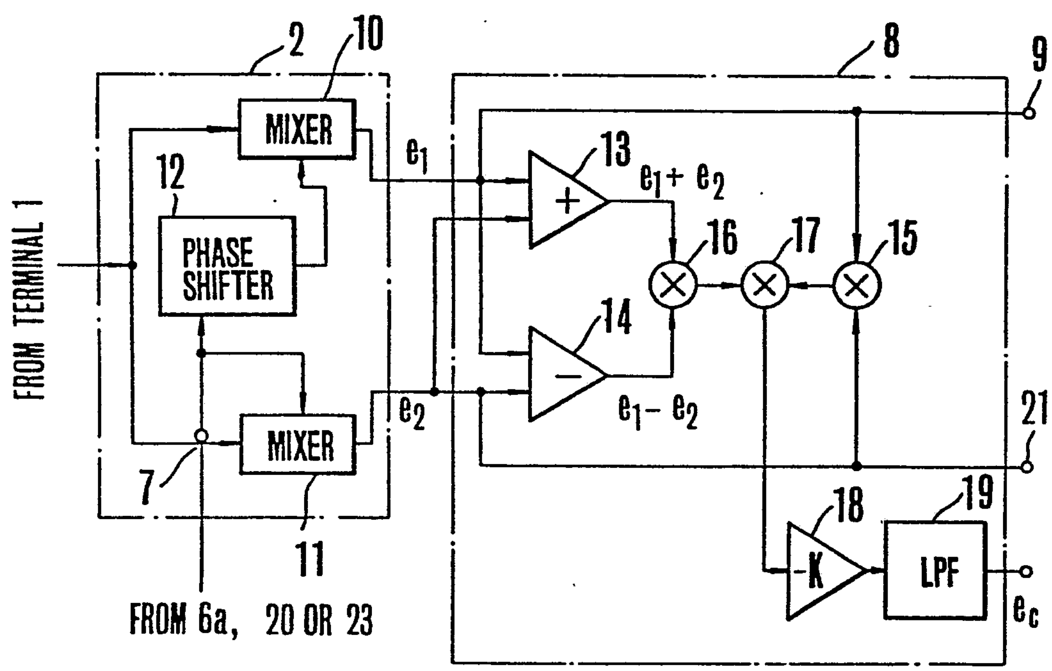
FROM TERMINAL 1
2
10
MIXER
12
PHASE SHIFTER
MIXER
7
11
FROM 6a, 20 OR 23
8
9
$e_1$
$e_2$
13
$e_1 + e_2$
14
$e_1 - e_2$
16
17
15
21
18
-K
19
LPF
$e_c$

FIG.3

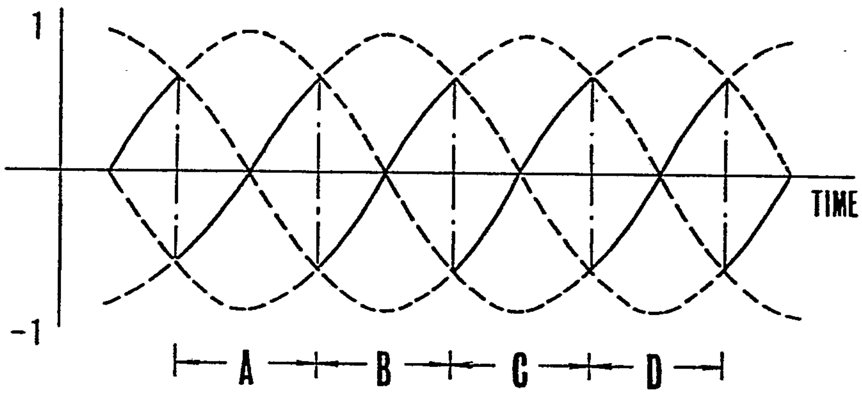
1
-1
TIME
A
B
C
D

FIG.4

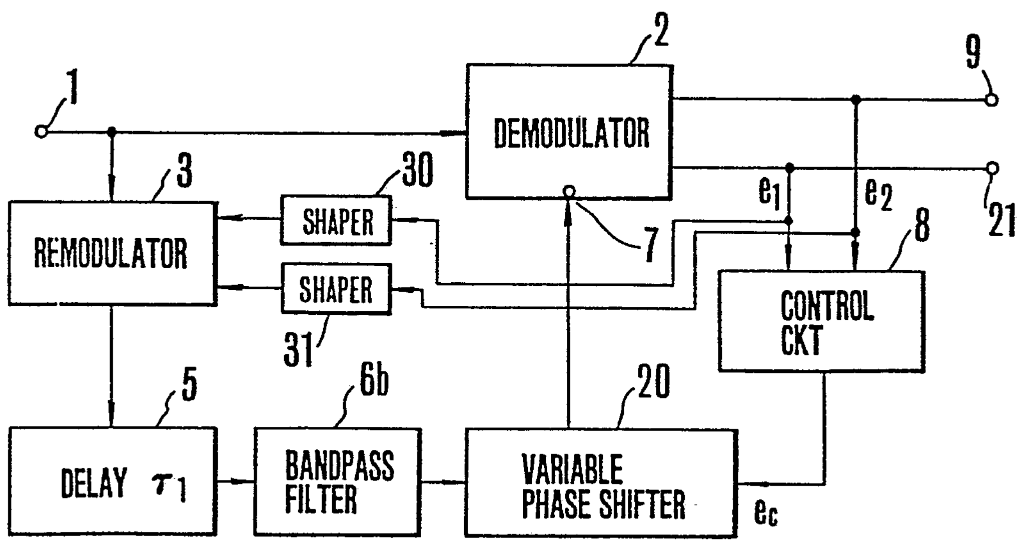
1
2
DEMODULATOR
9
21
3
REMODULATOR
30
SHAPER
SHAPER
31
7
$e_1$
$e_2$
8
CONTROL
CKT
5
DELAY $\tau_1$
6b
BANDPASS
FILTER
20
VARIABLE
PHASE SHIFTER
ec

FIG.5

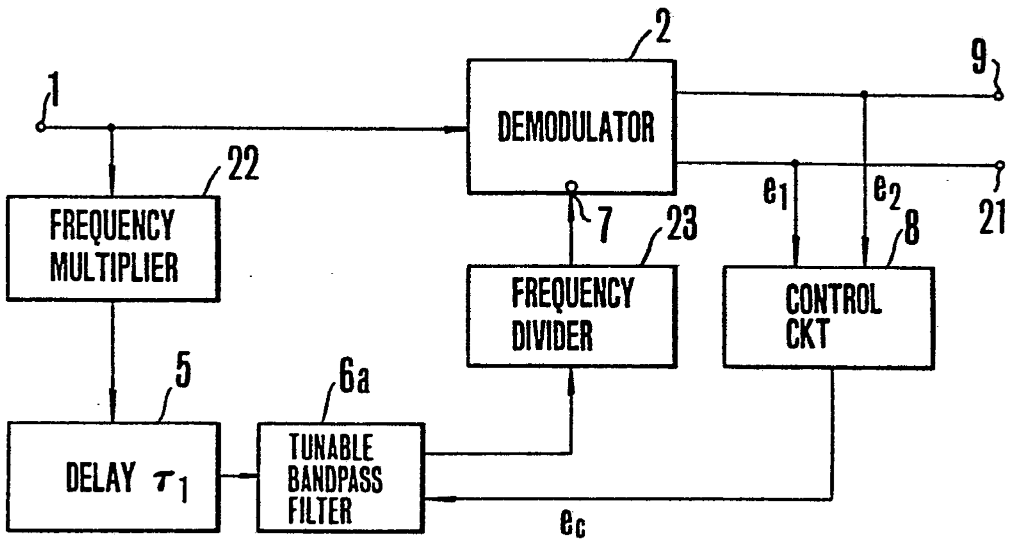
2
1
9
DEMODULATOR
22
FREQUENCY MULTIPLIER
7
23
e1
e2
8
21
FREQUENCY DIVIDER
CONTROL CKT
5
6a
DELAY τ1
TUNABLE BANDPASS FILTER
ec

FIG.6

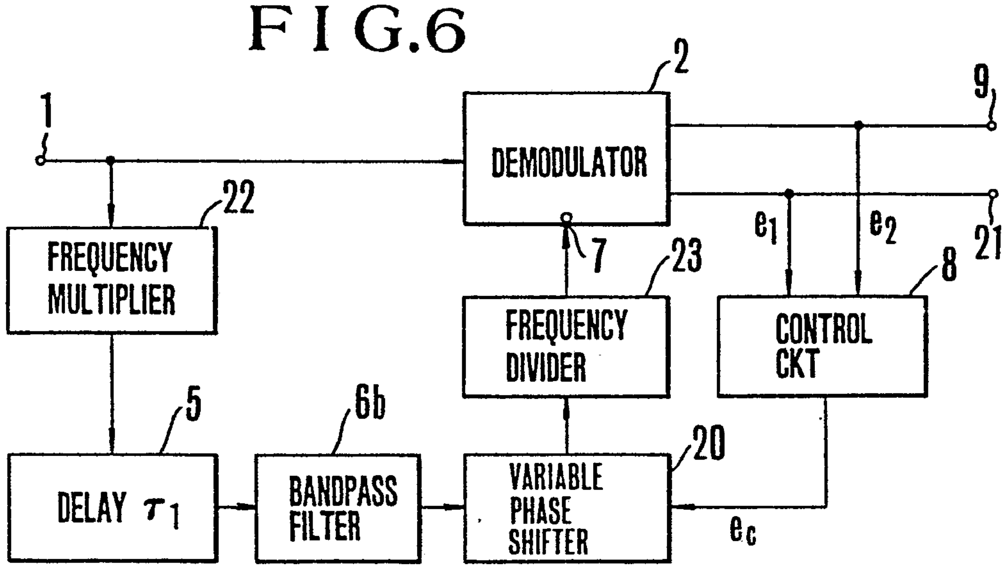
2
1
9
DEMODULATOR
22
FREQUENCY MULTIPLIER
7
23
e1
e2
8
21
FREQUENCY DIVIDER
CONTROL CKT
5
6b
20
DELAY τ1
BANDPASS FILTER
VARIABLE PHASE SHIFTER
ec

F I G.7

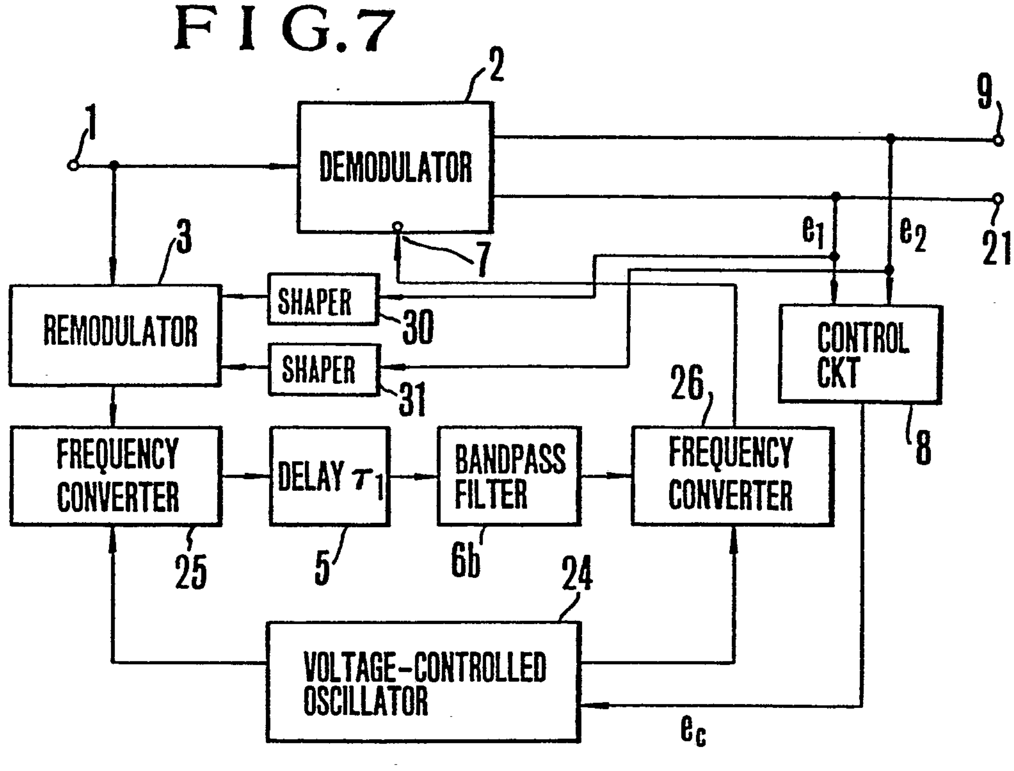
1
2
DEMODULATOR
9
21
7
e1
e2
3
REMODULATOR
SHAPER
30
SHAPER
31
CONTROL CKT
8
26
FREQUENCY CONVERTER
DELAY τ1
BANDPASS FILTER
FREQUENCY CONVERTER
25
5
6b
24
VOLTAGE-CONTROLLED OSCILLATOR
ec

F I G.8

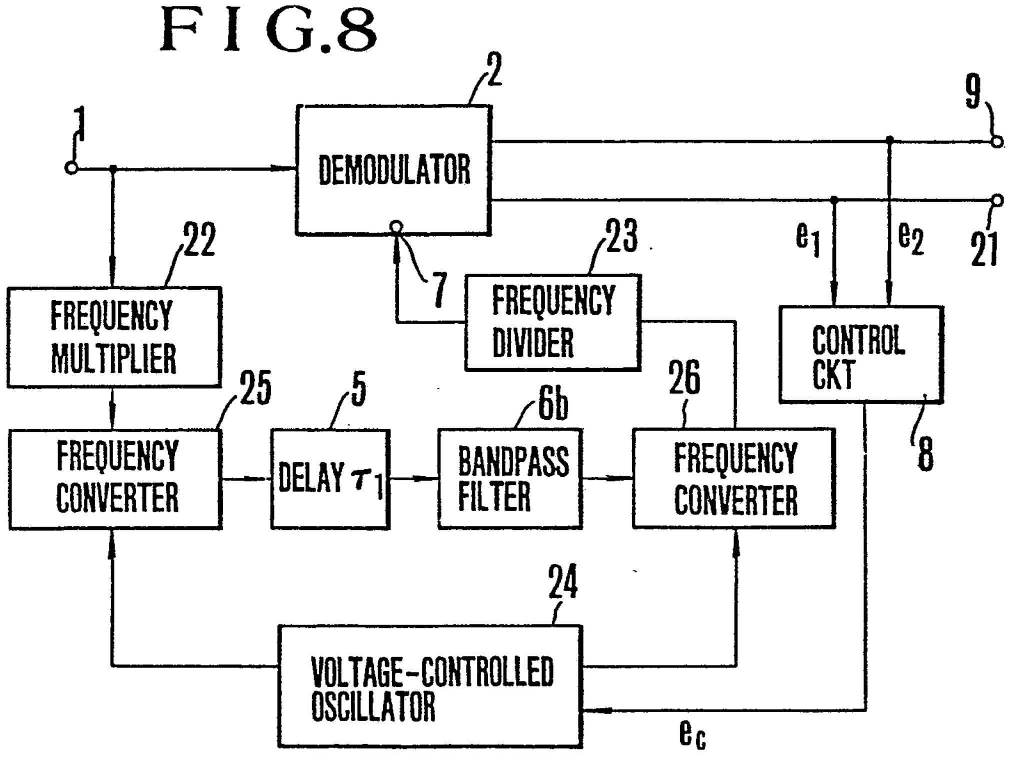
1
2
DEMODULATOR
9
21
7
e1
e2
22
FREQUENCY MULTIPLIER
23
FREQUENCY DIVIDER
CONTROL CKT
8
25
5
6b
26
FREQUENCY CONVERTER
DELAY τ1
BANDPASS FILTER
FREQUENCY CONVERTER
24
VOLTAGE-CONTROLLED OSCILLATOR
ec